# EUROPEAN PATENT APPLICATION

(11) **EP 3 989 625 A1**
(43) Date of publication of application: **27.04.2022**
(21) Application number: 19934206.4
(22) Date of filing: 21.06.2019
(51) Int. Cl.: H04W 16/14, H04W 16/28, H04W 72/04

(54) **TERMINAL AND COMMUNICATION METHOD**

(71) Applicant: NTT DOCOMO, INC., Chiyoda-Ku Tokyo 100-6150 (JP)
(72) Inventor: HARADA, Hiroki, Tokyo 100-6150 (JP); MURAYAMA, Daisuke, Tokyo 100-6150 (JP); KURITA, Daisuke, Tokyo 100-6150 (JP)
(74) Representative: Hoffmann Eitle
(86) International application number: PCT/JP2019/024811
(87) International publication number: WO 2020/255403

(57) **Abstract**

A terminal includes a receiving unit that receives a system information signal transmitted in an unlicensed frequency band; and a control unit that configures a search space for monitoring for receiving control information and configures classification information for classifying a plurality of system information signals according to applied transmit beams, based on a first index value included in the system information signal received by the receiving unit.

## Description

### TECHNICAL FIELD

The present invention relates to a terminal and a communication method in a radio communication system.

### BACKGROUND ART

Currently, in the Third Generation Partnership Project (3GPP), access to an unlicensed frequency band based on New Radio (NR) has been studied (Study on NR-based Access to Unlicensed Spectrum; Non-Patent Document 1).

In a case in which the NR-U is used, it is to be ensured that the NR-U system can coexist with another radio access technology (RAT) used in the unlicensed frequency band, for example, a Wi-Fi 802.11ac network. Accordingly, in a case in which the NR-U terminal 20 starts transmission in the unlicensed frequency band, the NR-U terminal 20 is assumed to perform Listen Before Talk (LBT), in order to ensure that there is no transmitting terminal (for example, terminals conforming to the Wi-Fi 802.11ac system) in the vicinity. The LBT is a communication method in which carrier sensing is performed prior to starting a transmission and the transmission within a predetermined time length is allowed only if a channel is not used by another neighboring system.

### Related Art Document

### [Non-Patent Document]

Non-Patent Document 1: 3GPP TR 38.889 V16.0.0(2018-12)
Non-Patent Document 2: 3GPP TS 38.331 V15.5.1(2019-04)
Non-Patent Document 3: 3GPP TS 38.213 V15.5.0 (2019-03)

### SUMMARY OF THE INVENTION

### [PROBLEM TO BE SOLVED BY THE INVENTION]

When controlResourceSetZero and searchSpaceZero included in the existing PDCCH-ConfigSIB1 is applied to NR-U, it may be difficult to include additional information for NR-U in a PBCH. Accordingly, there is a need for a method that allows additional information for NR-U to be transmitted.

### [MEANS FOR SOLVING THE PROBLEM]

According to an aspect of the present invention, there is provided a terminal including a receiving unit that receives a system information signal transmitted in an unlicensed frequency band; and a control unit that configures a search space for monitoring for receiving control information and configures classification information that classifies a plurality of system information signals according to applied transmit beams, based on a first index value included in the system information signal received by the receiving unit.

### [ADVANTAGE OF THE INVENTION]

According to an embodiment, a method is provided that allows information for NR-U to be transmitted without increasing a payload size of a MIB.

### BRIEF DESCRIPTION OF DRAWINGS

FIG. 1 is a configuration diagram of a communication system according to an embodiment.
FIG. 2 is a diagram illustrating an example of types of QCL.
FIG. 3 is a diagram illustrating an example of a Master Information Block.
FIG. 4 is a diagram illustrating an example of information that can be configured for a terminal by controlResourceSetZero.
FIG. 5 is a diagram illustrating an example of information that can be configured for the terminal by searchSpaceZero.
FIG. 6 is a diagram illustrating an example of transmission candidate positions for SS/PBCH blocks in NR-U.
FIG. 7 is a diagram illustrating an example of Proposal 1.
FIG. 8 is a diagram illustrating an example of Proposal 2.
FIG. 9 is a diagram illustrating an example of a DRS configuration.
FIG. 10 is a diagram illustrating an example of the DRS configuration.
FIG. 11 is a diagram illustrating an example of the DRS configuration.
FIG. 12 is a diagram illustrating an example of the DRS configuration.
FIG. 13 is a diagram illustrating an example of the DRS configuration.
FIG. 14 is a diagram illustrating an example of Interpretation 1 of DRS unit size = one-slot.
FIG. 15 is a diagram illustrating an example of Interpretation 2 of DRS unit size = one-slot.
FIG. 16 is a diagram illustrating an example of a DRS configuration for DRS unit size = half-slot.
FIG. 17 is a diagram illustrating an example of the DRS configuration for DRS unit size = half-slot.
FIG. 18 is a diagram illustrating an example of Proposal 3.
FIG. 19 is a diagram illustrating an example of Proposal 3.
FIG. 20 is a diagram illustrating an example of Proposal 3.
FIG. 21 is a diagram illustrating an example of the monitoring of TypeO-PDCCH.
FIG. 22 is a diagram illustrating an example of a case in which a plurality of SSB transmission candidate positions to which the same beam is applied are included in a DRS transmission window.
FIG. 23 is a diagram illustrating an example of a case in which a plurality of SSB transmission candidate positions to which the same beam is applied are included in a DRS transmission window.
FIG. 24 is a diagram illustrating an example of a functional configuration of a terminal.
FIG. 25 is a diagram illustrating an example of a functional configuration of a base station
FIG. 26 is a diagram illustrating an example of a hardware configuration of the terminal and the base station.

### [EMBODIMENTS OF THE INVENTION]

In the following, embodiments of the present invention are described with reference to the drawings. The embodiments described below are merely examples, and embodiments to which the present invention is applied are not limited to the following embodiments.

In the embodiments described below, terms used in the existing LTE are used, such as Synchronization Signal (SS), Primary SS (PSS), Secondary SS (SSS), Physical Broadcast channel (PBCH), and Physical Random Access channel (PRACH). This is for convenience of description, and signals and functions similar to these may be referred to by other names. The above-described terms in NR correspond to NR-SS, NR-PSS, NR-SSS, NR-PBCH, NR-PRACH, and the like. However, even if a signal is used for NR, the signal is not always explicitly indicated as "NR-."

In embodiments of the present invention, a duplex method may be a Time Division Duplex (TDD) method, a Frequency Division Duplex (FDD) method, or any other method (e.g., Flexible Duplexing).

In the following description, a method of transmitting a signal using a transmit beam may be digital beamforming, in which a signal multiplied by a precoding vector (precoded with the precoding vector) is transmitted, or analog beamforming, in which beamforming is implemented using a variable phase shifter in an RF (Radio Frequency) circuit. Similarly, a method of receiving a signal using a receiving beam may be digital beamforming, in which a received signal is multiplied by a predetermined weight vector, or analog beamforming, in which beamforming is implemented using a variable phase shifter in an RF circuit. Hybrid beamforming combining digital beamforming and analog beamforming may be applied to transmission and/or reception. Transmitting a signal using a transmit beam may be transmitting the signal with a specific antenna port. Similarly, receiving a signal using a receiving beam may be receiving the signal with a specific antenna port. An antenna port may be a logical antenna port or a physical antenna port defined by the 3GPP standard. The above-described precoding or beamforming may be referred to as a precoder, a spatial domain filter, or the like.

Note that a method of forming a transmit beam and receiving beam is not limited to the above-described methods. For example, in a base station 10 or a terminal 20 having multiple antennas, a method of changing an angle of each antenna may be used, a method of using a precoding vector and a method of changing the angle of the antenna may be used, a method of switching different antenna panels may be used, a method of combining multiple antenna panels may be used, or other methods may be used. For example, in a high frequency band, a plurality of mutually different transmit beams may be used. The use of multiple transmit beams is called multibeam operation, and the use of a single transmit beam is called single-beam operation.

In the embodiments of the present invention, "configuring" a radio parameter or the like may include pre-configuring a predetermined value, or configuring the radio parameter signalled from the base station 10 or the terminal 20.

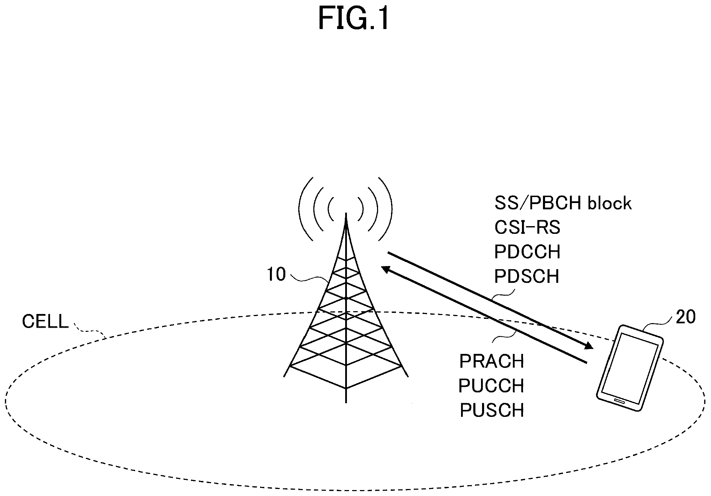

FIG. 1 is a diagram illustrating a radio communication system according to an embodiment of the present invention. The radio communication system in an embodiment of the present invention includes a base station 10 and a terminal 20, as depicted in FIG. 1. In FIG. 1, one base station 10 and one unit of the terminal 20 are depicted. However, this is an example, and, for each of the devices, there may be a plurality of devices.

The base station 10 is a communication device that provides one or more cells and performs radio communication with the terminal 20. A physical resource of a radio signal is defined in a time domain and a frequency domain, the time domain may be defined by a number of OFDM symbols, and the frequency domain may be defined by a number of subcarriers or a number of resource blocks. The base station 10 transmits a synchronization signal and system information to the terminal 20. A synchronization signal is, for example, NR-PSS and NR-SSS. A part of system information is transmitted, for example, by NR-PBCH, which is also called broadcast information. A synchronization signal and broadcast information may be periodically transmitted as an SS block (SS/PBCH block) consisting of a predetermined number of OFDM symbols. For example, the base station 10 transmits a control signal or data in DL (Downlink) to the terminal 20 and receives a control signal or data in UL (Uplink) from the terminal 20. The base station 10 and the terminal 20 are capable of transmitting and receiving signals while performing beamforming. For example, as shown in FIG. 1, a reference signal transmitted from the base station 10 includes a Channel State Information Reference Signal (CSI-RS), and a channel transmitted from the base station 10 includes Physical Downlink Control Channel (PDCCH) and Physical Downlink Shared Channel (PDSCH).

The terminal 20 is a communication device provided with a radio communication function, such as a smartphone, a cellular phone, a tablet, a wearable terminal, and a communication module for Machine-to-Machine (M2M). The terminal 20 may be referred to as a user equipment (User Equipment, UE) 20. The terminal 20 utilizes various communication services provided by a radio communication system by receiving a control signal or data in DL from the base station 10 and transmitting a control signal or data in UL to the base station 10. For example, as illustrated in FIG. 1, channels transmitted from the terminal 20 include Physical Uplink Control Channel (PUCCH) and Physical Uplink Shared Channel (PUSCH).

In the New Radio (NR), in order to secure coverage for communications using radio waves in a high frequency band, beamforming is applied to transmission of data in a Physical Downlink Shared Channel (PDSCH), transmission of a control signal in a Physical Downlink Control Channel (PDCCH), transmission of a synchronization signal and broadcast information in a Synchronization Signal/Physical Broadcast Channel (SS/PBCH) Block (SSB), and transmission of a reference signal (Channel State Information Signal (CSI-RS)/Demodulation Reference Signal (DMRS)).

For example, in Frequency Range 2 (FR2), i.e., in a frequency band of millimeter wave higher than or equal to 24 GHz, 64 beams can be used for transmission of SSBs, and in Frequency Range 1 (FR1), i.e., in a sub-6GHz frequency band, 8 beams can be used for transmission of SSBs.

For performing communication using a beam, beam management or beam control is important. For example, if there are two beams, the base station 10 may need to signal to the terminal 20 which beam is used to transmit the signal. A Transmission Configuration Indication (TCI) state is specified so as to transmit, to the terminal 20, a notification of the beam to be used, or to transmit, to the terminal 20, a notification of switching of a beam to be used.

Details to be signaled by a TCI state include Quasi-Co-Location (QCL) that indicates it is possible to assume that one reference signal (RS) and one channel are identical radio channels, or the one reference signal (RS) and the one channel have the same radio property (the same beam).

For example, the fact that a reference signal, such as a CSI-RS (or SS/PBCH), and a PDSCH that is a channel for transmitting data are QCL implies that the reference signal and the data have a relationship such that the reference signal and the data are transmitted with a same beam.

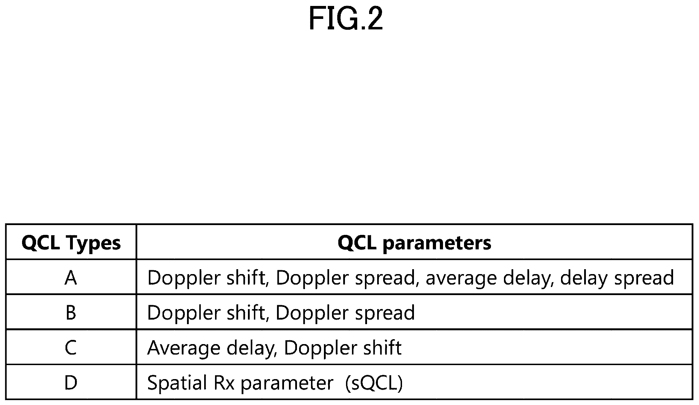

As illustrated in FIG. 2, four types of QCL are defined from A to D. For signaling beam information, QCL Type D is mainly used. QCL Type D implies that transmissions by the same beam. Other than that, for example, QCL Type A is used for signaling colocation, for example, whether the base stations 10 are located at a same location.

Currently, in the Third Generation Partnership Project (3GPP), an access to an unlicensed frequency band based on New Radio (NR) has been studied (Study on NR-based Access to Unlicensed Spectrum, for example, Non-Patent Document 1).

In the study of New Radio Unlicensed (NR-U), the use of an unlicensed frequency band of lower than or equal to 7 GHz has been mainly studied. As a system deployment scenario, for example, the following scenarios have been studied: a scenario in which carrier aggregation is performed between NR and NR-U; a scenario in which dual connectivity is performed between LTE or NR and NR-U; an NR-U standalone scenario; and a scenario in which an unlicensed frequency band is used for the downlink (DL) and a licensed frequency band is used for the uplink (UL) in the stand-alone scenario.

In a case in which the NR-U is used, it is to be ensured that the NR-U system can coexist with another radio access technology (RAT) used in the unlicensed frequency band, for example, a Wi-Fi 802.11ac network. Accordingly, in a case in which the NR-U terminal 20 starts transmission in the unlicensed frequency band, the NR-U terminal 20 is assumed to perform Listen Before Talk (LBT), in order to ensure that there is no transmitting terminal (for example, terminals conforming to the Wi-Fi 802.11ac system) in the vicinity. The LBT is a communication method in which carrier sensing is performed prior to starting a transmission and the transmission within a predetermined time length is allowed only if a channel is not used by another neighboring system.

### (PDCCH-ConfigSIBl in Release 15 NR)

PDCCH-ConfigSIBl in Release 15 NR is an Information Element (IE) included in a Master Information Block (MIB) described in Non-Patent Document 2.

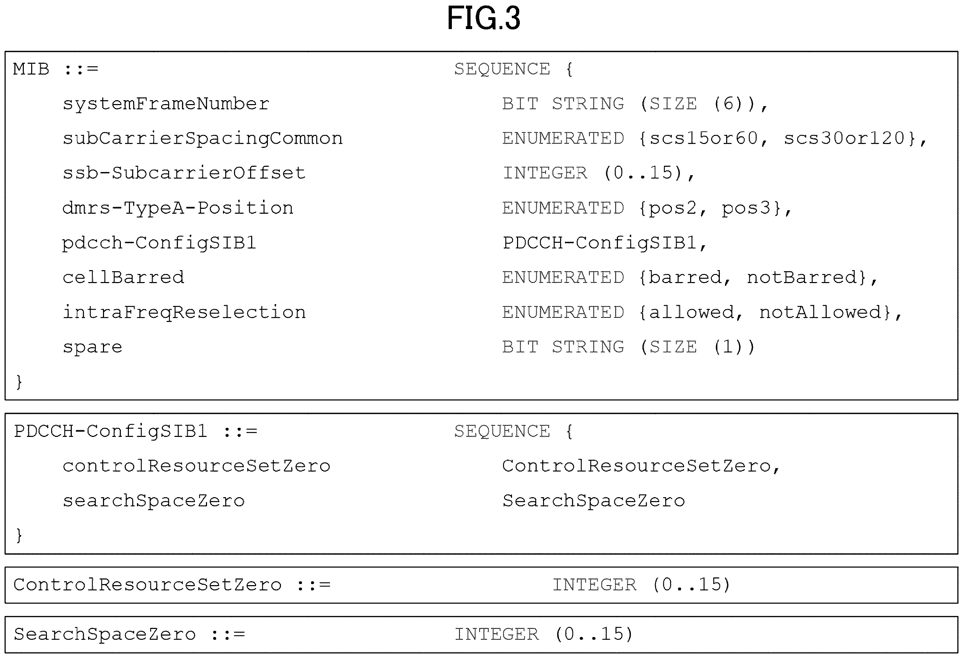

As illustrated in FIG. 3, the PDCCH-ConfigSIB1 includes two IEs, that is, controlResourceSetZero and searchSpaceZero. Each of the controlResourceSetZero and the searchSpaceZero is a 4-bit parameter for notifying one integer value included in the range of 0 to 15.

During cell search, if the terminal 20 determines that there is a Control-resource set (CORESET) of TypeO-PDCCH Common Search Space (CSS) based on the MIB, the terminal 20 derives the number of resource blocks and the number of symbols of the CORESET from four most significant bits (MSBs) of the PDCCH-ConfigSIBl. Here, the four MSBs of the PDCCH-ConfigSIBl correspond to the controlResourceSetZero. In addition, the terminal 20 derives PDCCH monitoring occasions from four least significant bits (LSBs) of the PDCCH-ConfigSIB1. Here, the four LSBs of the PDCCH-ConfigSIB1 correspond to the searchSpaceZero.

### (controlResourceSetZero)

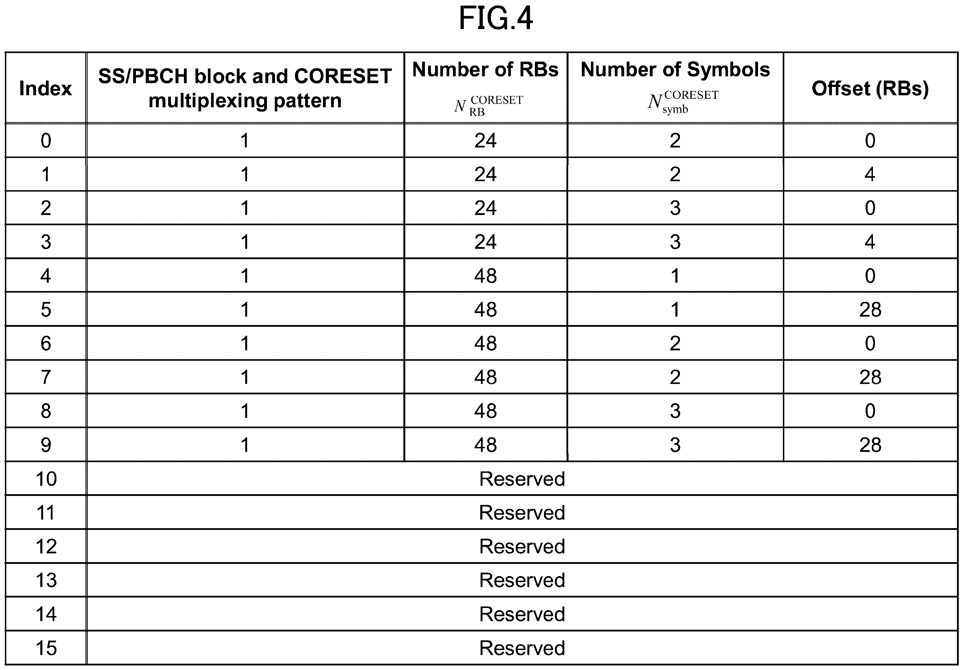

FIG. 4 is a diagram illustrating an example of the content of information that can be configured for the terminal 20 by the controlResourceSetZero (Non-Patent Document 3). For example, in a case in which a subcarrier spacing of 30 kHz is applied and the minimum channel bandwidth is 40 MHz, the terminal 20 interprets (parses) the four bits of the controlResourceSetZero based on a table illustrated in FIG. 4. The value of 4 bits corresponds to an index in the table illustrated in FIG. 4 and the index takes one integer value in the range of 0 to 15. The terminal 20 configures a multiplexing pattern of an SS/PBCH block (which may be referred to as an SS/PBCH block, an SS block, or an SSB) and a Control-resource set (CORESET), the number of resource blocks (RB) of the CORESET, the number of symbols of the CORESET, and a resource block level offset between the SS/PBCH block and the CORESET based on the notified Index value as illustrated in the table of FIG. 4.

### (searchSpaceZero)

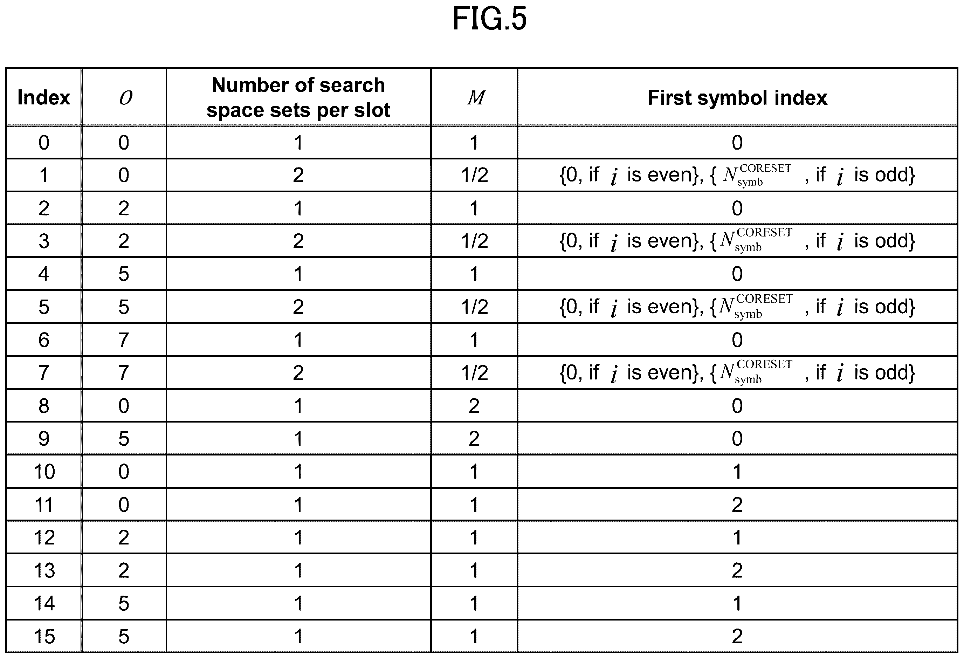

FIG. 5 is a diagram illustrating an example of the content of information that can be configured for the terminal 20 by the searchSpaceZero (Non-Patent Document 3). The terminal 20 interprets (parses) 4 bits of the searchSpaceZero based on a table illustrated in FIG. 5. The value of 4 bits corresponds to an index in the table illustrated in FIG. 5 and the index takes an integer value in the range of 0 to 15. The terminal 20 configures the following based on the value of the notified index as illustrated in the table of FIG. 5: a value of a subframe offset between a slot including an SS/PBCH block and a corresponding slot for monitoring PDCCH (specified by a parameter *O* in the table illustrated in FIG. 5); the number of search space sets for monitoring the PDCCH included in one slot; a parameter M used by the terminal 20 to determine a slot that is located earlier in time between two consecutive slots in which the terminal 20 is to monitor the PDCCH in a common search space (CSS) set of TypeO-PDCCH; and, a First symbol index indicating an index of a symbol at which PDCCH monitoring is started in the slot.

### (Study on NR-U in 3GPP Release 16)

In the study of NR-U in 3GPP Release 16, the following are assumed.
- In a frequency band of 5 GHz and a frequency band of 6 GHz, the UE assumes 30 kHz as the subcarrier spacing (SCS) of an SS/PBCH block if there is no particular notification from the network side.
- As a subcarrier spacing of an SS/PBCH block, 15 kHz can be configured for the UE by higher layer signaling.
- For an operation of the NR system in an unlicensed frequency band, a subcarrier spacing of an SS/PBCH block is the same as a subcarrier spacing of CORESET#0.
- The number of resource blocks (RBs) in a frequency domain of CORESET#0 is 48 resource blocks for a subcarrier spacing of 30 kHz and is 96 resource blocks for a subcarrier spacing of 15 kHz.
- As the number of symbols of CORESET#0, 1 or 2 is supported.

In addition, the following items are discussed in the study of NR-U in 3GPP Release 16.
- A new position of TypeO-PDCCH Monitoring Occasion (MO). For example, whether a seventh symbol is to be the new position of the TypeO-PDCCH MO.
- Whether information necessary to derive a Quasi Co-Location (QCL) relationship indicating whether the same beam is used among different SS/PBCH block indices is to be included in the Master Information Block (MIB) and the information is to be transmitted.
- For the position of the TypeO-PDCCH MO, in a case in which the base station is unable to transmit the PDCCH at the position at which the PDCCH is assumed to be transmitted due to a failure in Listen Before Talk (LBT), whether the PDCCH is simply not transmitted or the PDCCH is transmitted at another position.

### (Problem to be solved)

In a case in which the NR system is used in an unlicensed frequency band, suppose that the existing controlResourceSetZero and searchSpaceZero (of 3GPP release 15) (for example, the controlResourceSetZero illustrated in FIG. 4 and the searchSpaceZero illustrated in FIG. 5) are used as they are.

In this case, for the NR-U of 3GPP Release 16, it is agreed that, as the number of CORESET symbols, 1 or 2 is supported, and 48 RBs (in a case in which the SCS is 30 kHz) and 96 RBs (in a case in which the SCS is 15 kHz) are supported as the number of CORESET RBs. Accordingly, the controlResourceSetZero for configuring another value is unable to be used and becomes useless (unusable). Actually, a field "Number of Symbols" in the table illustrated in FIG. 4 includes not only 1 and 2 but also 3. Furthermore, the table of FIG. 4 illustrates an example in which the SCS is 30 kHz. However, a field "Number of RBs" includes not only 48 but also 24. That is, the configuration of the controlResourceSetZero illustrated in the table of FIG. 4 includes a configuration that may fail to satisfy the conditions agreed by the NR-U of 3GPP Release 16. Such a configuration may be unable to be used for the NR-U of Release 16.

In a case in which the NR system is used in the unlicensed frequency, it is assumed that the LBT is used. Accordingly, if the LBT fails, it is considered that the base station 10 is unable to transmit an SS/PBCH block. If the SS/PBCH block is not transmitted from the base station 10, the terminal 20 is unable to detect a cell, measure a cell, and establish synchronization with a cell. Accordingly, it is assumed that the number of transmission candidate positions for SS/PBCH blocks is increased.

In 3GPP Release 15 NR, eight positions are prepared as the transmission candidate positions of SS/PBCH blocks in FR1 and the UE assumes that different transmission beams are applied to the eight transmission candidate positions. Accordingly, in Release 15 NR, it is possible to transmit a maximum of eight SS/PBCH blocks or it is possible to transmit only one SS/PBCH block. However, in the case of Release 15 NR, it is assumed that, after one position for transmitting an SS/PBCH is determined, the SS/PBCH block is not transmitted at another position.

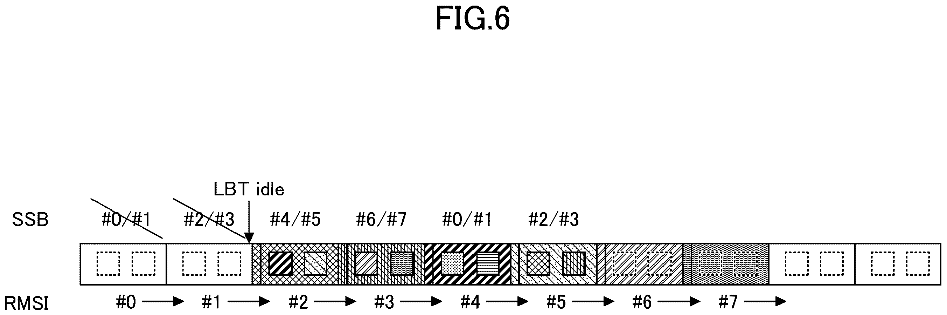

FIG. 6 is a diagram illustrating an example of transmission candidate positions for SS/PBCH blocks in the case of NR-U. As illustrated in FIG. 6, in the case of NR-U, it is possible to allocate not only the existing transmission candidate positions for SS/PBCH blocks (SSBs) indicated by #0 to #7 but also a maximum of 20 transmission candidate positions for the SSBs in a Discovery Reference Signal (DRS) transmission window of 5 ms. Here, the SSB and Remaining Minimum SI (RMSI) that is transmitted by a beam that is the same as that of the SSB, i.e., System Information Block1 (SIB1) may be collectively referred to as a DRS. For a subcarrier spacing of 30 kHz, the slot length is 0.5 ms. Accordingly, 10 slots are included in the DRS transmission window of 5 ms and each slot includes two transmission candidate positions for the SSBs. Thus, a total of 20 transmission candidate positions for the SSBs are allocated.

In the example of the transmission candidate positions for the SSBs illustrated in FIG. 6, for example, if the base station 10 attempts to transmit an SSB at the position of the first SSB#0 in time and the base station 10 is unable to transmit the SSB at the position of the first SSB#0 due to a failure in LBT, the base station 10 may be assumed to transmit the SSB at another transmission candidate position. For example, as in the example illustrated in FIG. 6, suppose that another transmitting device is performing transmission at the transmission candidate positions #0 to #3 from the front position in time. In this case, the base station 10 may start transmission from the fifth transmission candidate position SSB#4 from the front position in time. Furthermore, the base station 10 may transmit the SSB, which has been attempted to be transmitted at the first position SSB#0 in time, at the ninth transmission candidate position SSB#0 from the front position in time.

Upon detecting the SSB, the terminal 20 reads the configuration of the controlResourceSetZero and the searchSpaceZero from the MIB in the PBCH included in the SSB. However, the terminal 20 may be unable to perform PDCCH monitoring appropriately, unless it is possible to change the information on searchSpaceZero, i.e., the position at which a PDCCH is to be monitored, in accordance with a change in the position to transmit the SSB.

For example, suppose that a configuration of PDCCH monitoring in FIG. 6 is such that a PDCCH corresponding to an SSB index number is to be monitored at a slot with the same number as the SSB index number and the next slot. At this time, it is not possible to perform transmission in two slots from the front position in time due to a failure in LBT. Accordingly, it is not possible to transmit a PDCCH corresponding to SSB#0 (and SSB#1). Here, for SSB#0 and SSB#1, it is possible to perform transmission at the ninth transmission candidate position SSB#0 from the front position in time and the next transmission candidate position SSB#1 (the position at slot#4). However, currently, it is not assumed that the monitoring position of the PDCCH corresponding to SSB#0 (and SSB#1) is changed. Thus, even if the base station 10 can transmit the SSB, the base station may be unable to transmit the PDCCH corresponding to the SSB (the terminal 20 may be unable to appropriately monitor the PDCCH).

That is, even if a plurality of transmission candidate positions that are separated to some extent in time are prepared for SS/PBCH blocks (SSBs) and the base station 10 is allowed to transmit an SS/PBCH block at another transmission candidate position upon failure in LBT, the terminal 20 may be unable to receive RMSI when the transmission position of the SS/PBCH block is changed, unless a plurality of monitoring positions (PDCCH transmission candidate positions) separated to some extent in time is prepared for Monitoring Occasion in a TypeO-PDCCH common search space.

The bits of the MIB are almost exhausted in 3GPP Release 15 and it is considered that it is necessary to use the existing bits of the MIB for another purpose or to increase the payload size of the MIB in order to notify new information in the MIB for NR-U. For example, if it is attempted, for an NR-U terminal 20, to transmit information necessary for deriving QCL relationship among different SSB indexes by including the information in a MIB, it is considered to make usable the existing bits of the MIB for deriving QCL relationship, or to increase the payload size of the MIB. A change in design of PBCH coding or the like is necessary to increase the payload size of the MIB, and, thus, it is considered that an effect on the system is significantly large.

As described above, there is a need for allowing information necessary for NR-U to be transmitted from the base station 10 to the terminal 20 without changing the payload size of a MIB. Furthermore, there is a need for defining a plurality of RMSI PDCCH transmission candidate positions, so that, even if LBT fails at the original transmission candidate position, the RMSI can be transmitted from the base station 10 to the terminal 20.

### (Proposal 1)

In the NR-U carrier (NR unlicensed frequency band), the base station 10 may be allowed to transmit, to the terminal 20, a notification of the parameters of CORESET#0 and information related to the QCL relationship among SSBs by using the controlResourceSetZero. For example, among the parameters of CORESET#0 defined in 3GPP Release 15, the multiplexing pattern, the offset, and the number of RBs may be fixed (only one value of each parameter is specified) and only the number of symbols may be set to 1 or 2.

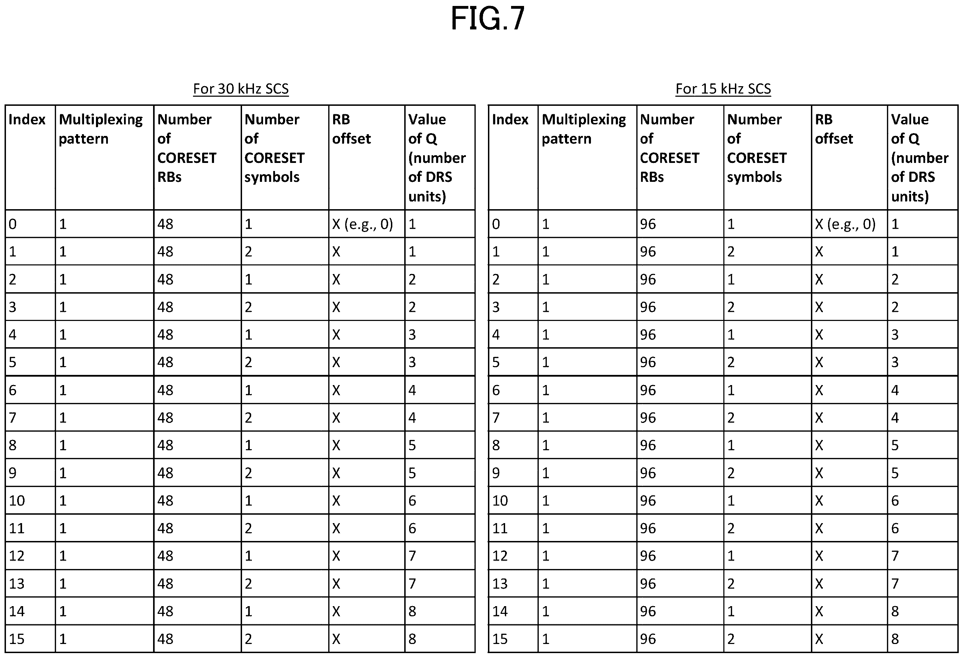

FIG. 7 is a diagram illustrating an example of Proposal 1. FIG. 7 illustrates an example of a correspondence table for allowing the base station 10 to transmit, to the terminal 20, a notification of the parameters of CORESET#0 and the information related to the QCL relationship among SSBs by using the controlResourceSetZero. In the correspondence table illustrated in FIG. 7, the multiplexing pattern, the offset, and the number of RBs among the parameters of the table illustrated in FIG. 4 are fixed (for each index value of the index values 1 to 15, only one value is specified). For the number of CORESET symbols, 1 or 2 can be specified for one Index. Furthermore, a Value of Q (the number of DRS units), which is not included in the parameters of the table illustrated in FIG. 4, is added to the correspondence table illustrated in FIG. 7. The Value of Q is the information related to the QCL relationship among SSBs and may be an integer value in a range of 1 to 8. The Value of Q indicates the number of SSBs transmitted. For example, if the Value of Q is 1, an SSB is transmitted at one transmission candidate position in a DRS transmission window, namely, a window including a plurality of transmission candidate positions for SSBs. For example, if the Value of Q is 8, SSBs are transmitted at eight transmission candidate positions in the DRS transmission window. For example, in the example illustrated in FIG. 6, if the Value of Q is 8 and numbers #0, #1, ..., #19 are assigned to the transmission candidate positions for SSBs from the front position in time, it can be assumed that for #0 and #8, that is, transmission candidate positions for SSBs that are separated from each other by eight transmission candidate positions, the same beam is applied. Based on such a correspondence, the QCL relationship among SSBs can be indicated by using the Value of Q. Alternatively, in the example illustrated in FIG. 7, a case of only two indexes (0 and 1) may be defined in which the Number of CORESET symbols is 1 or 2, and the remaining indexes 2 to 15 may be Reserved.

### (Proposal 2)

In the NR-U carrier, the base station 10 may transmit, to the terminal 20, a notification of the parameters of Search Space#0 and information related to the DRS unit size (the number of SSBs that can be transmitted in a slot) by using the searchSpaceZero. For example, the DRS unit size may be expressed as follows: DRS unit size = {one-slot or half-slot}, DRS unit size = Number of SSBs within a slot = {1 or 2}, and DRS unit size = SSB position index to be used = {all or even only}.

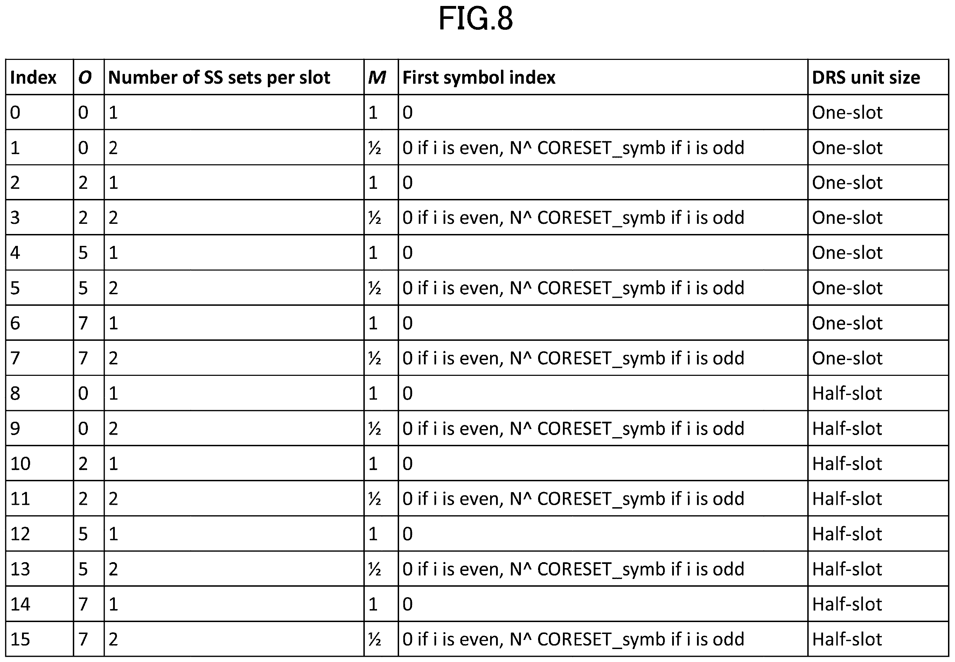

FIG. 8 is a diagram illustrating an example of Proposal 2. FIG. 8 illustrates an example of a correspondence table that allows the base station 10 to transmit, to the terminal 20, a notification of the parameters of Search Space#0 and the information related to the DRS unit size (the number of SSBs transmitted in a slot) by using the searchSpaceZero. In the example illustrated in FIG. 8, alternatively, only a case in which the DRS unit size is One-slot (in the case of Indexes 0 to 7) may be defined and the remaining Indexes 8 to 15 may be reserved.

### (Alt. 1)

The DRS unit size may be explicitly associated with the Index in the correspondence table as the parameter of the Search Space#0. FIG. 8 is a diagram illustrating an example in which the DRS unit size is explicitly associated with the Index in the correspondence table as the parameter of the Search Space#0.

### (Alt. 2)

The DRS unit size may be implicitly derived from the number of search space sets per slot from among the parameters of the Search Space#0. For example, if the number of search space sets per slot is set to 2, the terminal 20 may assume that the DRS unit size = half-slot. If the number of search space sets per slot is set to 1, the terminal 20 may assume that the DRS unit size = one-slot.

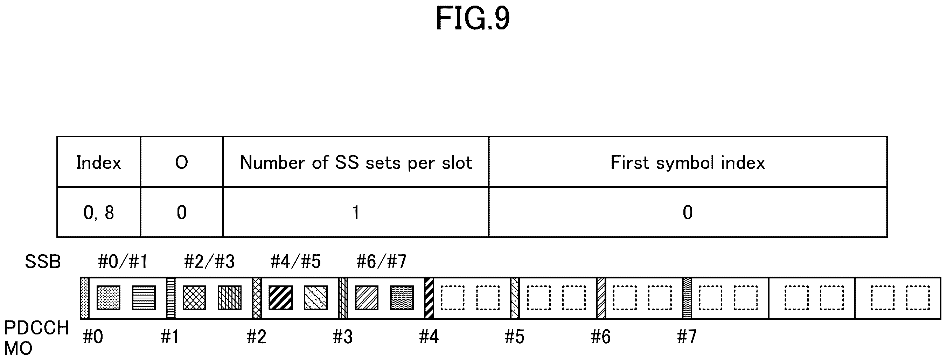

FIG. 9 is a diagram illustrating an example of a DRS configuration in a case in which the Index is 0 or 8, *O* is 0, the Number of SS sets per slots is 1, and the First symbol index is 0 in the table illustrated in FIG. 8. Since *O* is 0, the front position (in time) of a slot including an SSB is the same as the front position of a start slot of a PDCCH MO. Since the Number of SS sets per slots is 1, only one search space set is included in one slot. Accordingly, one PDCCH MO number is assigned to one slot such as the PDCCH MO numbers #0, #1, #2, ... in FIG. 9. Here, the fact that the SSB transmission candidate position number is the same as the PDCCH MO number means that a beam that is the same as that applied to SSB transmission is applied to PDCCH transmission.

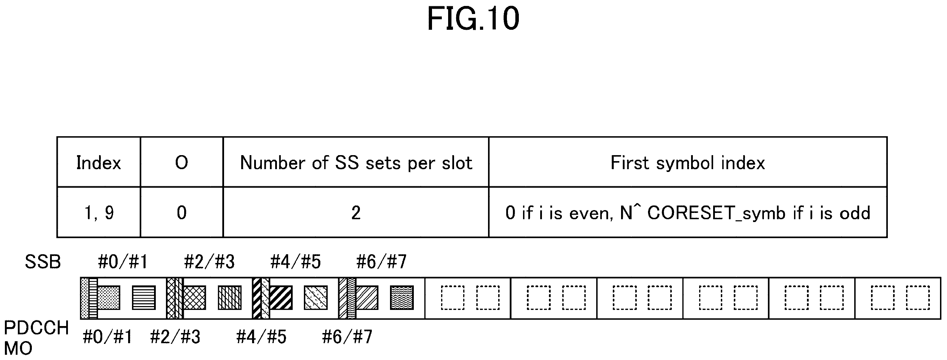

FIG. 10 is a diagram illustrating an example of a DRS configuration in a case in which the Index is 1 or 9, *O* is 0, and the Number of SS sets per slots is 2 in the table illustrated in FIG. 8. In a case in which the Number of SS sets per slots is 2, two search spaces are included in one slot. Thus, two First symbol indexes are defined in one slot. When the index i of the SSB is an even number, the First symbol index is 0. When the index i of the SSB is an odd number, the First symbol index is the number of symbols of CORESET#0. Here, 1 or 2 may be specified as the parameter of the number of symbols of CORESET#0. If 2 is specified as the parameter of the number of symbols of CORESET#0, a search space located later in time between two search spaces in the slot including the SSB may collide with an SSB symbol. As a method for avoiding the collision, the following options 1 and 2 are considered. Option 1: in a case in which 2 is specified as the number of symbols in the configuration of CORESET#0, the PDCCH MO is prevented from being allocated in a slot including an SSB transmission candidate position in the configuration of Search Space#0 (for example, the terminal 20 does not expect that the value of *O* is set to a value with which the PDCCH MO is located in a slot including an SSB transmission candidate position). Option 2: in a case in which 2 is specified as the number of symbols in the configuration of CORESET#0 and the Search Space#0 is configured such that the PDCCH MO is located in a slot including an SSB transmission candidate position, the terminal 20 assumes that the DRS unit size (the number of SSBs transmitted in a slot) is one-slot (the number of SSBs that can be transmitted in a slot = 1). Specifically, the terminal 20 may assume that the number of search space sets per slot = 1 is configured in the configuration of the searchSpaceZero. Alternatively, in a case in which the number of search space sets per slot = 2 is configured in the configuration of the searchSpaceZero, the terminal 20 may assume that the DRS unit size = one-slot (the number of SSBs that can be transmitted in a slot = 1).

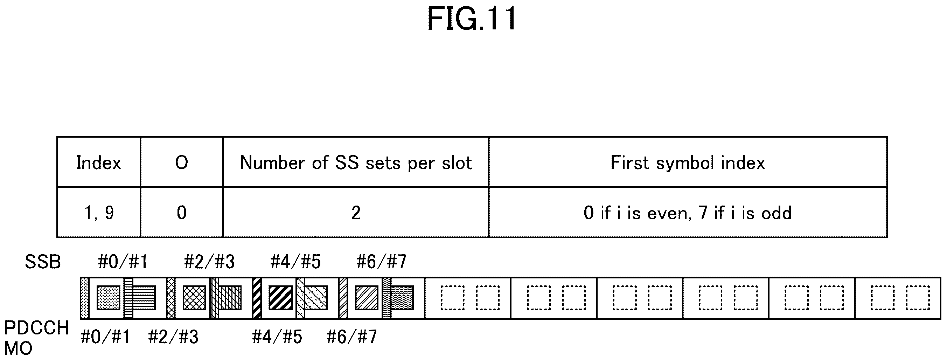

FIG. 11 is a diagram illustrating another example of the DRS configuration in a case in which the Index is 1 or 9, *O* is 0, and the Number of SS sets per slots is 2 in the table illustrated in FIG. 8. When the index i of the SSB is an even number, the First symbol index is 0. When the index i of the SSB is an odd number, the First symbol index is 7. In this case, as illustrated in FIG. 11, a configuration is such that the SSB and the PDCCH have a one-to-one correspondence and no beam is included between a set of an SSB and a PDCCH and another set of an SSB and a PDCCH. As illustrated in FIG. 11, the First symbol index may be 0 and 7 only if the following specific conditions are satisfied. The First symbol index may be 0 and 7 only if the number of CORESET symbols is 1, the DRU unit size = half-slot (SSB position index to be used = all), and the SSB and the TypeO-PDCCH are transmitted in the same slot (or at least one of the above-mentioned conditions is satisfied). For conditions other than the above-mentioned specific conditions, the First symbol index may be 0 and the number of symbols of CORESET#0.

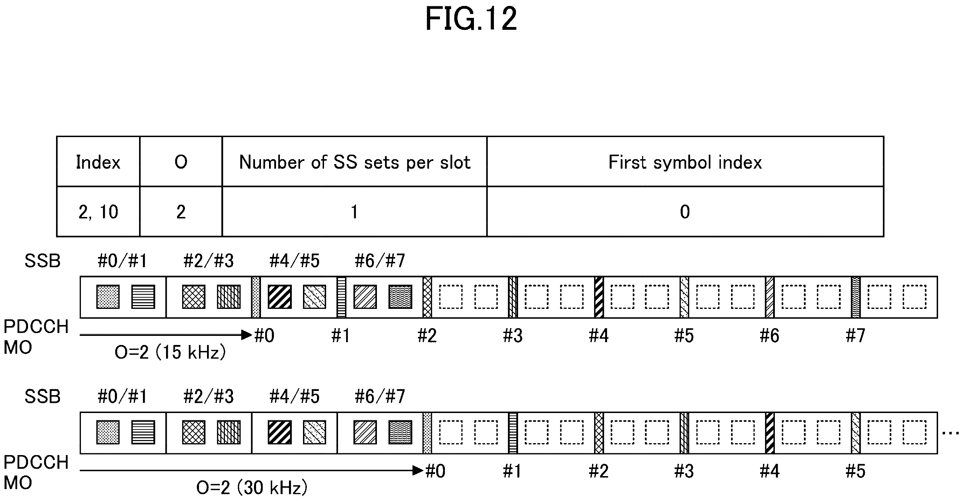

FIG. 12 is a diagram illustrating an example of the DRS configuration in a case in which the Index is 2 or 10, *O* is 2, the Number of SS sets per slots is 1, and the First symbol index is 0 in the table illustrated in FIG. 8. Here, the value of *O* specifies the value of the subframe offset between a reference slot (a first slot of a frame of SFN#0) and a slot including the PDCCH MO. In a case in which the subcarrier spacing is 15 kHz, *O* = 2 corresponds to 2 slots. In a case in which the subcarrier spacing is 30 kHz, *O* = 2 corresponds to 4 slots. Since *O* is 2, the start position of the PDCCH MO is shifted by two slots in the time direction in a case in which the subcarrier spacing is 15 kHz. Similarly, since *O* is 2, the start position of the PDCCH MO is shifted in the time direction by four slots in a case in which the subcarrier spacing is 30 kHz.

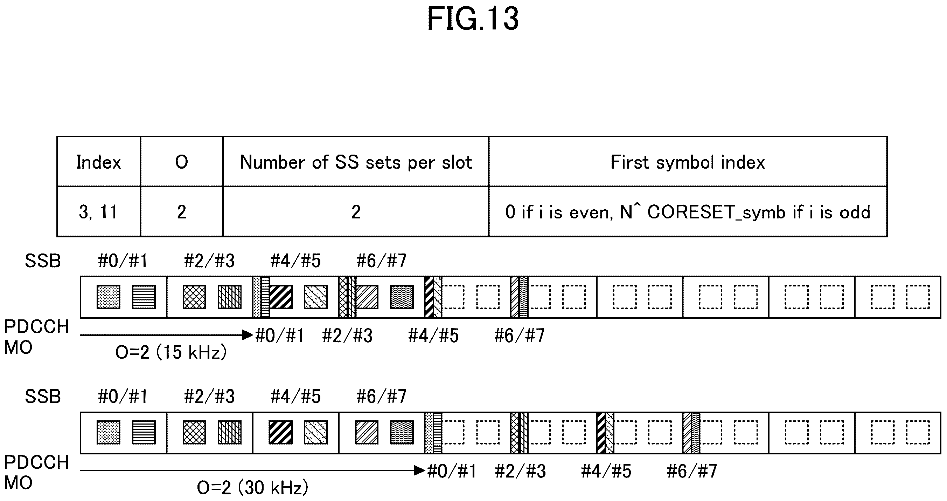

FIG. 13 is a diagram illustrating an example of the DRS configuration in a case in which the Index is 2 or 10, *O* is 2, and the Number of SS sets per slots is 2 in the table illustrated in FIG. 8. When the index i of the SSB is an even number, the First symbol index is 0. When the index i of the SSB is an odd number, the First symbol index is the number of CORESET symbols of search space set #0. As in the case of FIG. 12, since *O* is 2, the start position of the PDCCH MO is shifted in the time direction.

For the DRS unit size (or the number of SSBs that can be transmitted in a slot), at least the following two interpretations are considered for the DRS unit size = one-slot (or when the number of SSBs that can be transmitted in a slot is 1).

### (Interpretation 1)

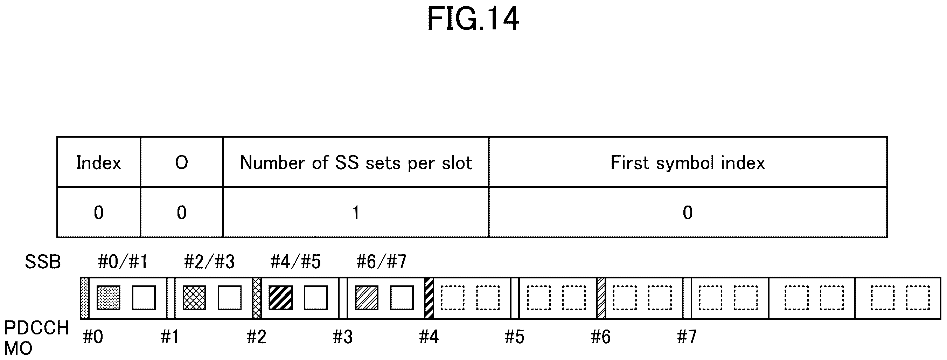

FIG. 14 is a diagram illustrating an example of Interpretation 1 for the DRS unit size = one-slot. For example, the terminal 20 may assume that (the position of) an odd-numbered SSB index is not used. In the above example, the odd-numbered SSB index is not used. However, embodiments of the present invention are not limited to this example. For example, in the above example, it may be assumed that an even-numbered SSB index is not used.

### (Interpretation 2)

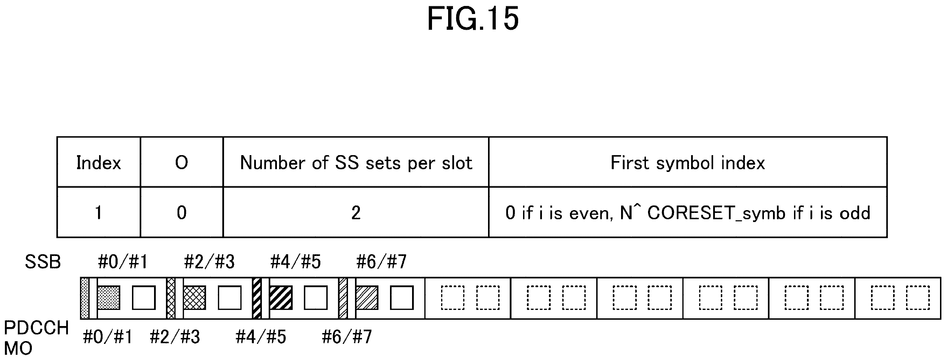

FIG. 15 is a diagram illustrating an example of Interpretation 2 for the DRS unit size = one-slot. For example, the terminal 20 may assume that only the position of the SSB which is located at a front position in time in each slot is numbered as a transmission candidate position for an SSB. In the example illustrated in FIG. 15, the transmission candidate positions for SSBs indicated by SSB#0, SSB#2, SSB#4, and SSB#6 may be updated with numbers SSB#0, SSB#1, SSB#2, and SSB#3, respectively. In the above example, only the position of the SSB that is located at a front position in time in each slot is numbered as a transmission candidate position for an SSB. However, embodiments of the present invention are not limited to this example. For example, in the above example, only the position of the SSB that is located later in time in each slot may be numbered as a transmission candidate position for an SSB.

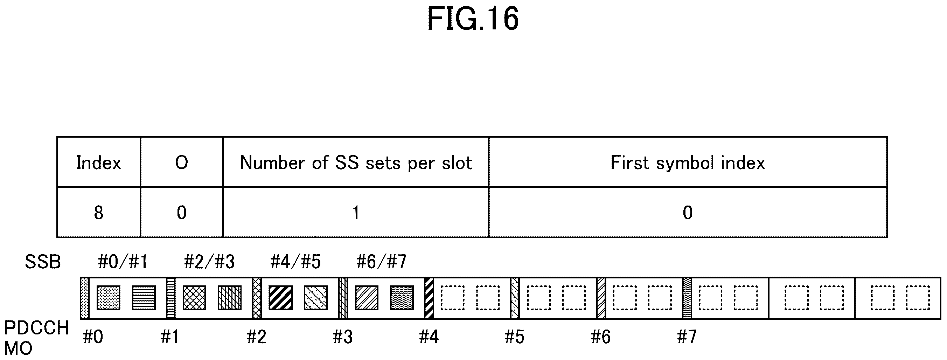

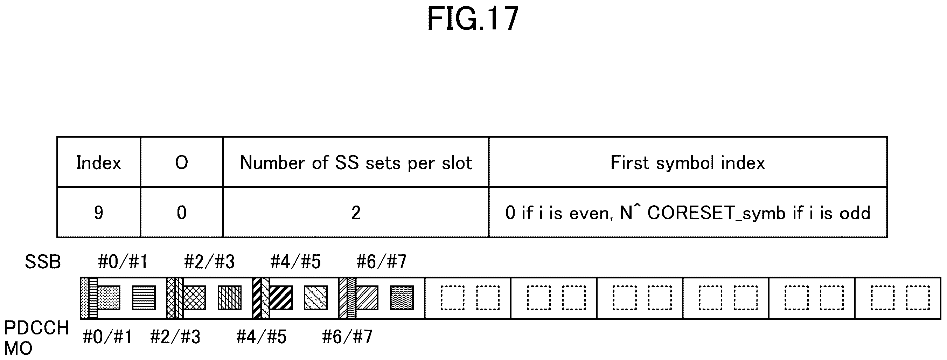

For the DRS unit size (or the number of SSBs that can be transmitted in a slot), if the DRS unit size = half-slot (or the number of SSBs that can be transmitted in a slot is two), the terminal 20 may assume that both the transmission candidate position for SSB which is located at a front position in time and the transmission candidate position for an SSB which is located later in time in each slot can be used. That is, the terminal 20 may assume that all of the transmission candidate positions for the SSBs can be used. However, the base station 10 may avoid transmitting an SSB at some transmission candidate positions from among all the transmission candidate positions for the SSBs. FIG. 16 and FIG. 17 are diagrams illustrating examples of the DRS configuration in a case in which the DRS unit size = half-slot. As illustrated in FIG. 16 and FIG. 17, numbers may be assigned to all of the transmission candidate positions for the SSBs.

### (Proposal 3)

In the NR-U carrier, the terminal 20 may monitor the TypeO-PDCCH in a plurality of discontinuous slots in a monitoring period (20 ms or an SSB periodicity) based on the searchSpaceZero and the controlResourceSetZero (information related to the QCL relationship among SSBs). For example, the searchSpaceZero may specify a reference TypeO-PDCCH MO and the information related to the QCL relationship among SSBs may specify an amount of a shift, from the reference position, of a position at which additional TypeO-PDCCH monitoring is to be performed.

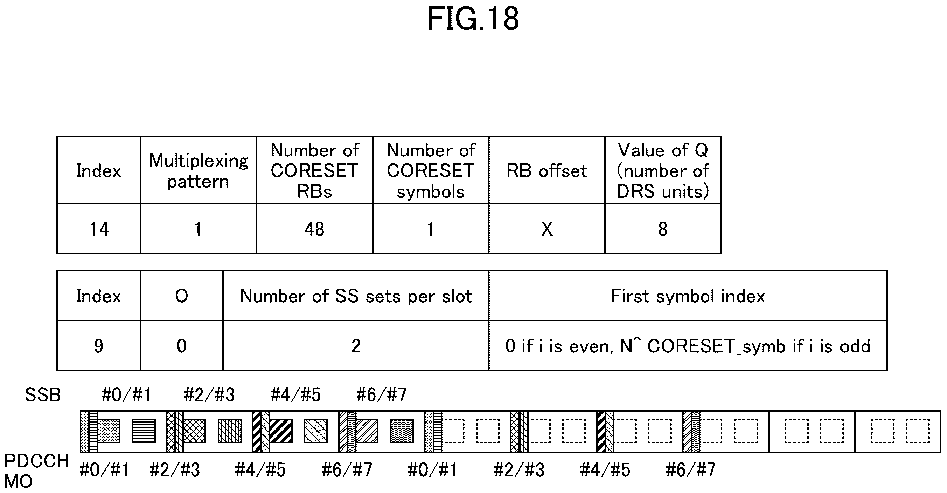

FIG. 18 is a diagram illustrating an example of Proposal 3. In the example illustrated in FIG. 18, the base station 10 notifies the terminal 20 of 14 as the index for specifying the configuration of the searchSpaceZero and 9 as the index for specifying the configuration of the controlResourceSetZero. The terminal 20 sets 8 as the Value of Q in response to the notification of 14 as the index for specifying the configuration of the searchSpaceZero. In addition, the terminal 20 sets 0 as the value of the subframe offset between a slot including the SSB and a slot that includes the PDCCH MO corresponding to the SSB, and sets 2 as the value of the number of search space sets per slot in response to the notification of 9 as the index for specifying the configuration of the controlResourceSetZero. Based on the notification of 14 as the index for specifying the configuration of the searchSpaceZero and the notification of 9 as the index for specifying the configuration of the controlResourceSetZero, the terminal 20 may assume that different transmit beams are applied to the SSB transmission candidate positions SSB#0, SSB#1, ..., SSB#7 illustrated in FIG. 18 and that two search space sets are included in each slot. The terminal 20 may additionally perform TypeO-PDCCH monitoring at a plurality of PDCCH MOs having the QCL relationship with the transmission candidate position at which the SSB is received, in response to receiving the SSB at any one of the SSB transmission candidate positions SSB#0, SSB#1, ..., SSB#7. For example, upon receiving an SSB at the SSB transmission candidate position SSB#0, the terminal 20 may monitor the TypeO-PDCCH at PDCCH MO#0 located in the first slot and the fifth slot in the DRS transmission window of the next period.

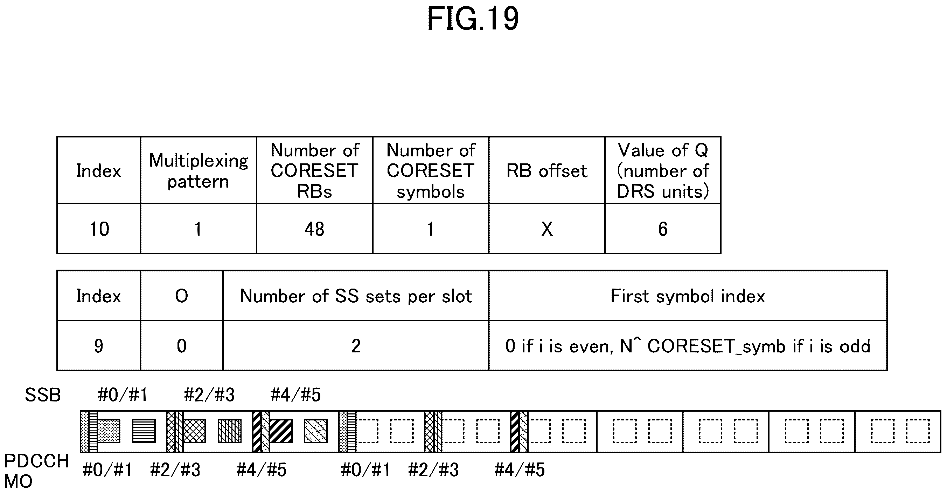

FIG. 19 is a diagram illustrating another example of Proposal 3. The example illustrated in FIG. 19 differs from the example illustrated in FIG. 18 in that the number of beams is 6. In the example illustrated in FIG. 19, for example, upon receiving an SSB at the SSB transmission candidate position SSB#0, the terminal 20 may monitor the TypeO-PDCCH at PDCCH MO#0 located in the first slot and the fourth slot in the DRS transmission window of the next period.

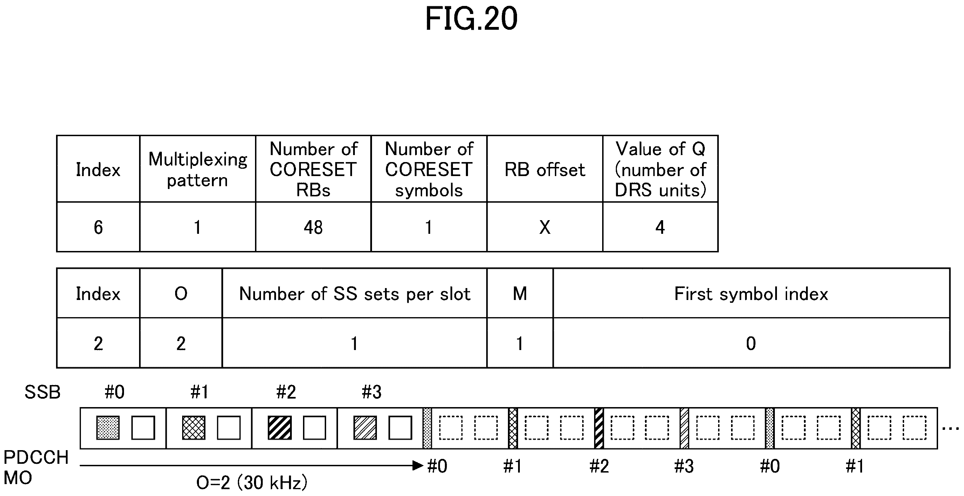

FIG. 20 is a diagram illustrating still another example of Proposal 3. The example illustrated in FIG. 20 differs from the example illustrated in FIG. 18 in that the number of beams is 4, the value of O is 2, and the value of the number of search space sets per slot is 1. In the example illustrated in FIG. 20, for example, upon receiving an SSB at the SSB transmission candidate position SSB#0, the terminal 20 may monitor the TypeO-PDCCH at PDCCH MO#0 located in the fifth slot and the ninth slot in the DRS transmission window of the next period.

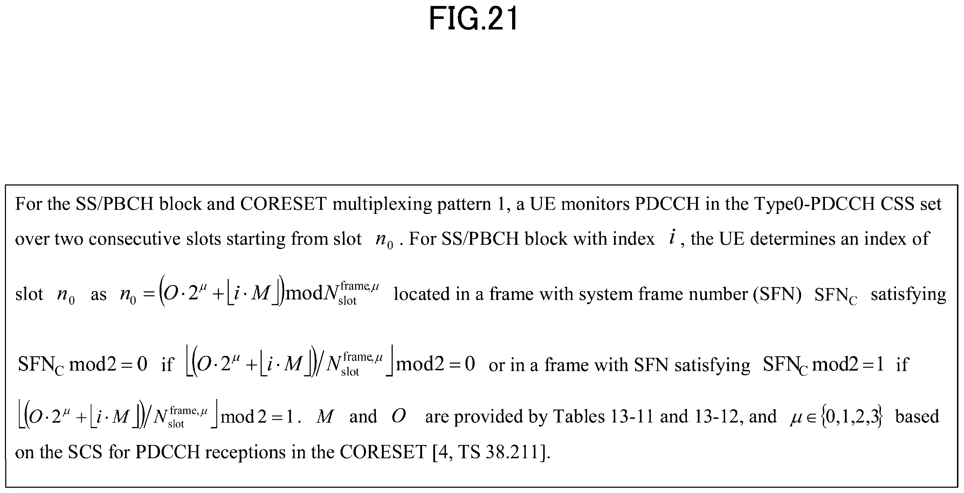

FIG. 21 is a diagram illustrating an example of the TypeO-PDCCH monitoring. According to the content illustrated in FIG. 21, the terminal 20 monitors the TypeO-PDCCH in two consecutive slots starting from n₀. In contrast, in the above-mentioned Proposal 3, it is proposed that the Type0-PDCCH monitoring is not performed in a slot n₀ and a slot n₀₊₁, but the TypeO-PDCCH monitoring is performed in the slot n₀ and a slot n_{0+X}. Here, X may be the number of different beams applied to the DRS configuration (a value related to the number of SSBs transmitted which is notified as the Value of Q). Alternatively, X may be a floor(Q·M). Alternatively, for example, the value of X may be a predetermined value regardless of the value of Q. By setting the value of X as a predetermined value regardless of the value of Q, monitoring of consecutive slots can be avoided, for example, when Q = 1.

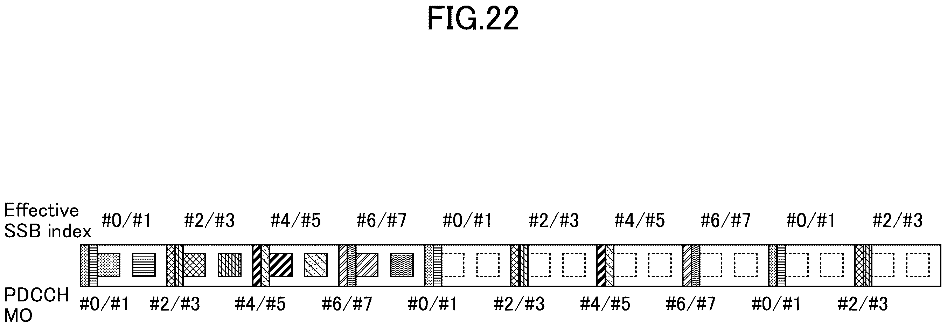

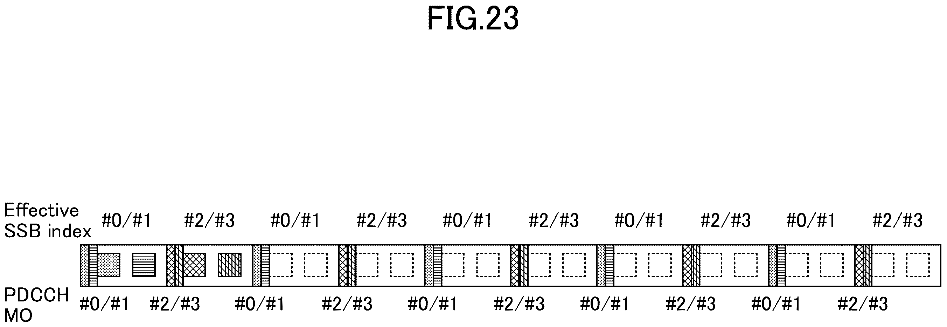

A case can be considered in which the DRS transmission window includes a plurality of SSB transmission candidate positions to which the same beam is applied. For example, in the case of FIG. 22, two other SSB transmission candidate positions, to which the same beam as that applied to SSB#0 is applied, are included in the DRS transmission window. In the case of FIG. 23, four other SSB transmission candidate positions, to which the same beam as that applied to SSB#0 is applied, are included in the DRS transmission window.

In this case, when the SSB and the monitoring start position for the corresponding PDCCH are not shifted, the TypeO-PDCCH common search space set monitoring slot may be defined as the same slot as the slot including the transmission candidate position for the corresponding SSB. For example, in the case of FIG. 22, three slots including the TypeO-PDCCH common search space set corresponding to the SSB#0 are included in the DRS transmission window (there are three PDCCH MO#0s). In addition, for example, in the case of FIG. 23, five slots including the TypeO-PDCCH common search space set corresponding to the SSB#0 are included in the DRS transmission window (there are five PDCCH MO#0s). When the SSB and the monitoring start position for the PDCCH are shifted, (for example, including a case in which the SSB is transmitted in the first 5 ms of the frame and the TypeO-PDCCH is monitored in the second 5 ms of the frame), it may be possible to specify a total number of slots, each of which is for performing monitoring at the slot separated by X slots. For example, the monitoring may be performed in a predetermined number (for example, two) of slots defined by a technical specification, regardless of the value of Q. In addition, for example, the monitoring may be performed a number of times corresponding to the number of X slot intervals included in a predetermined period (for example, 5 ms or a DRS transmission window length) (that is, depending on the values of Q and M).

### (Device configuration)

Next, an example of a functional configuration of each of the base station 10 and the terminal 20 for executing the processing operation described above is described. Each of the base station 10 and the terminal 20 includes all the functions described in the embodiments. However, each of the base station 10 and the terminal 20 may include a part of a function of the all functions described in the embodiments.

### <Base Station Apparatus 10>

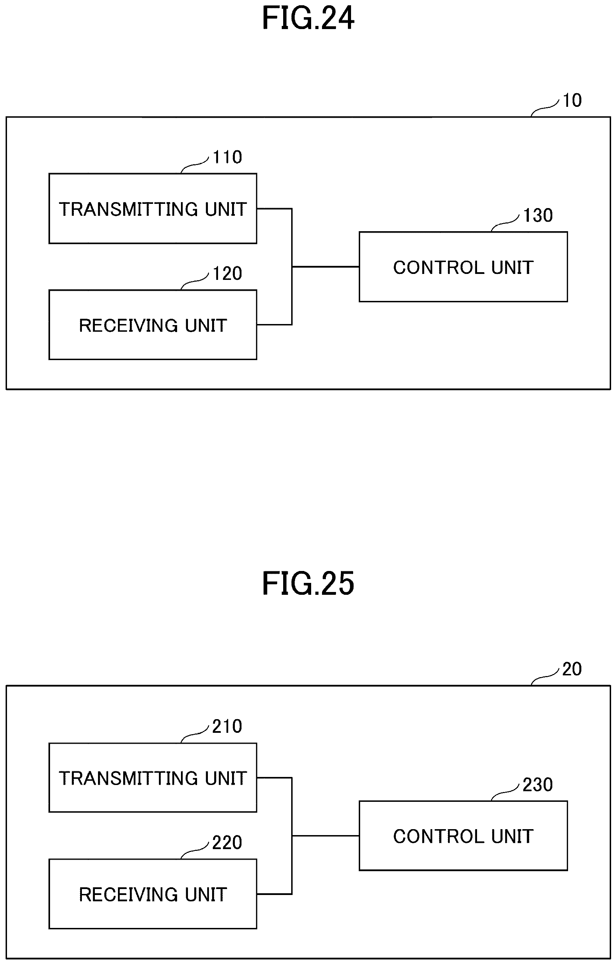

FIG. 24 is a diagram illustrating an example of the functional configuration of the base station 10. As illustrated in FIG. 24, the base station 10 includes a transmitting unit 110, a receiving unit 120, and a control unit 130. The functional configuration illustrated in FIG. 24 is merely an example. The functional division and names of functional units may be any division and names, provided that the operation according to the embodiments of the present invention can be performed.

The transmitting unit 110 includes a function for generating a transmit signal from transmit data, and the transmitting unit 110 transmits the transmit signal through radio. The receiving unit 120 receives various types of signals through radio, and the receiving unit 120 obtains a higher layer signal from the received physical layer signal. Furthermore, the receiving unit 120 includes a measurement unit that performs measurement of a received signal to obtain received power, and so forth.

The control unit 130 controls the base station 10. Note that a function of the control unit 130 related to transmission may be included in the transmitting unit 110 and a function of the control unit 130 related to reception may be included in the receiving unit 120.

In the base station 10, for transmitting an SS/PBCH block in an unlicensed frequency band, the control unit 130 may apply LBT. Specifically, prior to transmitting an SS/PBCH block, the control unit 130 performs carrier sensing, and the control unit 130 may transmit the SS/PBCH block within a predetermined time length only if it is confirmed that a channel is not used by a neighboring system.

For example, if it is attempted to transmit an SSB at a specific transmission candidate position for the SSB and LBT fails, the control unit 130 of the base station 10 may determine to transmit the SSB at another transmission candidate position.

Furthermore, in an unlicensed frequency band, the control unit 130 configures a MIB to be transmitted to the terminal 20. The control unit 130 configures controlResourceSetZero and searchSpaceZero to be included in a MIB.

The control unit 130 may select a parameter of CORESET#0 configured for the terminal 20 and select a value of an index corresponding to information related to QCL relationship among SSBs configured for the terminal 20. The control unit 130 may set the selected value of the index as a value of controlResourceSetZero.

The control unit 130 may select a parameter of Search Space#0 configured for the terminal 20 and may select a value of an index corresponding to a DRS unit size (the number of SSBs that can be transmitted within a slot) configured for the terminal 20. The control unit 130 may set the selected value of the index as the value of searchSpaceZero.

The transmitting unit 110 may transmit, to the terminal 20, a MIB including controlResourceSetZero and searchSpaceZero configured by the control unit 130 on a channel of an unlicensed frequency band.

### <Terminal 20>

FIG. 25 is a diagram illustrating an example of the functional configuration of the terminal 20. As illustrated in FIG. 25, the terminal 20 includes a transmitting unit 210, a receiving unit 220, and a control unit 230. The functional configuration illustrated in FIG. 25 is merely an example. The functional division and names of functional units may be any division and names, provided that the operation according to the embodiments can be performed.

The transmitting unit 210 includes a function for generating a signal to be transmitted to the base station 10 and transmitting the signal through radio. The receiving unit 220 includes a function for receiving various types of signals transmitted from the base station 10 and obtaining, for example, higher layer information from the received signals. The receiving unit 220 includes a measurement unit that measures a received signal to obtain a received power.

The control unit 230 controls the terminal 20. The function of the control unit 230 related to transmission may be included in the transmitting unit 210, and the function of the control unit 230 related to reception may be included in the receiving unit 220.

In an unlicensed frequency band, the receiving unit 220 receives an SS/PBCH block transmitted from the base station 10. The control unit 230 obtains a configuration of controlResourceSetZero and searchSpaceZero from a MIB in a PBCH included in the SS/PBCH block received by the receiving unit 220.

The control unit 230 identifies an index value that is set as a value of conrolResoruceSetZero, and the control unit 230 configures a parameter of CORESET#0 corresponding to the identified index value and information related to QCL relationship among SSBs. In this case, for example, the control unit 230 may set preconfigured fixed values for multiplexing pattern, offset, and number of RBs, from among parameters of CORESET#0, and the control unit 230 may set 1 or 2 according to the identified index value for number of symbols.

The control unit 230 identifies an index value set as a value of searchSpaceZero, and the control unit 230 configures a parameter of Search Space#0 corresponding to the identified index value and DRS unit size (the number of SSBs that can be transmitted within a slot).

Furthermore, the control unit 230 may configure searchSpaceZero and controlResourceSetZero (information related to QCL relationship among SSBs), and the receiving unit 220 may monitor TypeO-PDCCH in a plurality of discontinuous slots within a monitoring period (20 ms or SSB periodicity) based on the configuration of searchSpaceZero and controlResoruceSetZero configured by the control unit 230. In this case, the control unit 230 may specify TypeO-PDCCH MO, which is a reference, based on the configuration of searchSpaceZero, and the control unit 230 may specify an amount of a shift, from the reference position, of a position at which additional TypeO-PDCCH monitoring is to be performed, based on the information related to the QCL relationship among the SSBs.

### <Hardware configuration>

The block diagrams (FIG. 24 and FIG. 25) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices. Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, and the like. For example, a functional block (component) that functions to transmit is called a transmitting unit or a transmitter. In either case, as described above, the implementation method is not particularly limited.

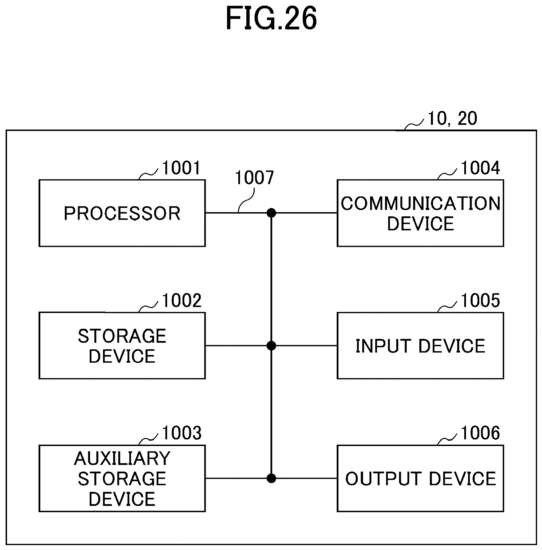

For example, the base station 10, the terminal 20, or the like in an embodiment of the present invention may function as a computer for performing a process according to the embodiments. Fig. 26 is a diagram illustrating an example of a hardware configuration of the base station 10 and the terminal 20 according to an embodiment. Each of the base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, device, unit, or the like. The hardware configuration of each of the base station 10 and the terminal 20 may be configured to include one or more of the depicted devices represented by 1001 through 1006, or may be configured without including some devices.

Each function in each of the base station 10 and the terminal 20 is implemented such that predetermined software (program) is read on hardware such as the processor 1001, the storage device 1002 and the like, and the processor 1001 performs an operation and controls communication by the communication device 1004 and at least one of reading and writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like.

Furthermore, the processor 1001 reads a program (program code), a software module, data, or the like from at least one of the auxiliary storage device 1003 and the communication device 1004 out to the storage device 1002, and executes various types of processes according to them. A program causing a computer to execute at least some of the operations described in the above embodiments is used as the program. For example, the control unit 130 of the base station 10 may be implemented by a control program which is stored in the storage device 1002 and operates on the processor 1001, and the other functional blocks may be implemented similarly. Various types of processes are described to be executed by one processor 1001 but may be executed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the radio communication method according to an embodiment of the present disclosure.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The auxiliary storage device 1003 may be referred to as an auxiliary storage device. The above-described storage medium may be, for example, a database, a server, or any other appropriate medium including at least one of the storage device 1002 and the auxiliary storage device 1003.

The communication device 1004 is hardware (a transmitting and receiving device) for performing communication between computers via at least one of a wired network and a wireless network and is also referred to as a "network device," a "network controller," a "network card," a "communication module," or the like. The communication device 1004 may be configured to include a high frequency switch, a duplexer, a filter, a frequency synthesizer, and the like to implement at least one of frequency division duplex (FDD) and time division duplex (TDD).

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The respective devices such as the processor 1001 and the storage device 1002 are connected by the bus 1007 to communicate information with each other. The bus 1007 may be configured with a single bus or may be configured with different buses between the devices.

Furthermore, each of the base station 10 and the terminal 20 may be configured to include hardware such as a microprocessor, a digital signal processor (DSP), an application specific integrated circuit (ASIC), a programmable logic device (PLD), or a field programmable gate array (FPGA), or all or some of the functional blocks may be implemented by hardware. For example, the processor 1001 may be implemented by at least one of these hardware components.

### (Conclusion of the embodiments)

In this specification, at least the following terminal and communication method are disclosed.

A terminal including a receiving unit that receives a system information signal transmitted in an unlicensed frequency band; and a control unit that configures a search space for monitoring for receiving control information and configures classification information for classifying a plurality of system information signals according to applied transmit beams, based on a first index value included in the system information signal received by the receiving unit.

According to the above-described configuration, the terminal can obtain not only the parameters of CORESET#0 but also information related to the QCL relationship among SSBs, based on the first index value set as the value of controlResourceSetZero. Accordingly, the base station can transmit the information related to the QCL relationship among SSBs, without changing the payload size of the MIB, and the terminal can obtain the information related to the QCL relationship among the SSBs.

The control unit may set a number of system information signals to be received in a unit time interval based on a second index value included in the system information signal received by the receiving unit.

According to the above-described configuration, the terminal can obtain not only the parameters of search space #0 but also the number of SSBs that can be received in a slot, based on the second index value set as the value of searchSpaceZero. Accordingly, the base station can transmit information indicating the number of SSBs that can be received in a slot, that is, information indicating the DRS unit size, without changing the payload size of the MIB, and the terminal can obtain the information indicating the number of SSBs that can be received in a slot, that is, the information indicating the DRS unit size.

The control unit may configure a reference position of the search space for monitoring for receiving the control information based on the second index value and may configure a position of another search space for performing additional monitoring for receiving the control information based on the reference position and the classification information.

According to the above-described configuration, even if the base station is unable to transmit an SSB at a predetermined SSB transmission candidate position due to a failure in LBT and the base station transmits the SSB at another SSB transmission candidate position, the terminal can monitor the PDCCH in another search space for performing additional monitoring.

The control unit may calculate a number of different beams applied to the plurality of system information signals based on the classification information and may set the position of the another search space based on the reference position and the calculated number of different beams.

The control unit may configure a plurality of search spaces as the another search space within a monitoring period.

A communication method performed by a terminal, the method including receiving a system information signal transmitted in an unlicensed frequency band; and configuring a search space for monitoring for receiving control information and configuring classification information for classifying a plurality of system information signals according to applied transmit beams, based on a first index value included in the received system information signal.

### (Supplemental embodiment)

The embodiments of the present invention are described above, but the disclosed invention is not limited to the above-described embodiments, and those skilled in the art would understand various modified examples, revised examples, alternative examples, substitution examples, and the like. In order to facilitate understanding of the present invention, specific numerical value examples are used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no contradiction. For the sake of convenience of processing description, the base station 10 and the terminal 20 are described using the functional block diagrams, but such devices may be implemented by hardware, software, or a combination thereof. Software executed by the processor included in the base station 10 according to the embodiments of the present invention and software executed by the processor included in the terminal 20 according to the embodiments of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Furthermore, a notification of information is not limited to the aspects or embodiments described in the present disclosure and may be provided by any other method. For example, the notification of information may be provided by physical layer signaling (for example, downlink control information (DCI) or uplink control information (UCI)), upper layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an RRC message and may be, for example, an RRC connection setup message, an RRC connection reconfiguration message, or the like.

Each aspect and embodiment described in the present disclosure may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), new Radio (NR), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The processing procedures, the sequences, the flowcharts, and the like of the respective aspects/embodiments described in the present disclosure may be reversed in order provided that there is no contradiction. For example, the method described in the present disclosure presents elements of various steps with an exemplary order and is not limited to a presented specific order.

In the present disclosure, a specific operation to be performed by the base station 10 may be performed by an upper node in some cases. In the network including one or more network nodes including the base station 10, various operations performed for communication with the terminal 20 can be obviously performed by at least one of the base station 10 and any network node (for example, an MME, an S-GW, or the like is considered, but it is not limited thereto) other than the base station 10. A case is exemplified above in which there is one network node other than the base station 10. The one network node may be a combination of a plurality of other network nodes (e.g., MME and S-GW).

Information or the like may be output from an upper layer (or a lower layer) to a lower layer (or an upper layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination may be performed in accordance with a value (0 or 1) indicated by one bit, may be performed in accordance with a Boolean value (true or false), or may be performed by a comparison of numerical values (for example, a comparison with a predetermined value).

The aspects/embodiments described in this disclosure may be used alone, in combination, or switched with implementation. Notification of predetermined information (e.g., "X" notice) is not limited to a method that is explicitly performed, and may also be made implicitly (e.g., "no notice of the predetermined information").

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL: Digital Subscriber Line)) and a radio technology (such as infrared rays or a microwave), at least one of the wired technology and the radio technology are included in a definition of a transmission medium.

Information, signals, and the like described in this disclosure may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or any combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC: Component Carrier) may be referred to as a "carrier frequency," a "cell," or the like.

The terms "system" and "network" used in the present disclosure are used interchangeably. Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names assigned to the various channels and the information elements are not limited in any respect.

In the present disclosure, the terms "Base Station (BS)," "radio base station," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base stations may also be indicated by terms such as a macrocell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "Mobile Station (MS)," "user terminal," "User Equipment (UE)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device which need not move during a communication operation. For example, at least one of the base station and the mobile station may be an Internet of Things (IoT) device such as a sensor.

Furthermore, the base station in the present disclosure may be replaced with a user terminal. For example, each aspect/embodiment of the present disclosure may be applied to a configuration in which communication between the base station and the user terminal is replaced with communication between a plurality of user terminals (for example, which may be referred to as Device-to-Device (D2D) or Vehicle-to-Everything (V2X)). In this case, the user terminal 20 may have the functions of the terminal 20 described above. Furthermore, the terms "uplink" and "downlink" may be replaced with terms corresponding to inter-terminal communication (for example, "side"). For example, an uplink channel, a downlink channel, or the like may be replaced with side channels. Similarly, the user terminal in the present disclosure may be replaced with the base station. In this case, the terminal 20 may have the functions of the above-mentioned user terminal 20.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case in which used in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS (Reference Signal) and may be referred to as a pilot, depending on a standard to be applied.

A phrase "based on" used in the present disclosure is not limited to "based only on" unless otherwise stated. In other words, a phrase "based on" means both "based only on" and "based on at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

In a case in which "include," "including," and variations thereof are used in the present disclosure, these terms are intended to be comprehensive, similar to a term "provided with (comprising)." Further, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

The numerology may be a communication parameter applied to at least one of transmission and reception of a certain signal or channel. For example, the numerology may indicate at least one of a subcarrier spacing (SCS), a bandwidth, a symbol length, a cyclic prefix length, a transmission time interval (TTI), a number of symbols per TTI, a radio frame configuration, a specific filtering process performed in the frequency domain by a transceiver, a specific windowing process performed in the time domain by a transceiver, and the like.

The slot may include one or more symbols (Orthogonal Drequency Division Multiplexing (OFDM) symbols, Single Carrier Frequency Division Multiple Access (SC-FDMA) symbols, or the like) in the time domain. The slot may be a time unit based on the numerology.

The slot may include a plurality of mini slots. Each mini slot may include one or more symbols in the time domain. Further, the mini slot may be referred to as a sub-slot. The mini slot may include fewer symbols than a slot. A PDSCH (or PUSCH) transmitted in units of times greater than the mini slot may be referred to as a PDSCH (or PUSCH) mapping type A. A PDSCH (or PUSCH) transmitted using a mini slot may be referred to as a PDSCH (or PUSCH) mapping type B.

All of a radio frame, a subframe, a slot, a mini slot, and a symbol indicates a time unit for transmitting a signal. As a radio frame, a subframe, a slot, a mini slot, and a symbol, different names respectively corresponding to them may be used.

For example, one subframe may be referred to as a transmission time interval (TTI: Transmission Time Interval), or a plurality of consecutive subframes may be referred to as a TTI, or one slot or one mini slot may be referred to as a TTI. In other words, at least one of the subframe and the TTI may be a subframe (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the subframe.

Here, for example, the TTI refers to a minimum time unit of scheduling in radio communication. For example, in the LTE system, the base station performs scheduling of assigning a radio resource (a frequency bandwidth, a transmission power, or the like which can be used in each user terminal) to each terminal in units of TTIs. The definition of the TTI is not limited thereto.

The TTI may be a transmission time unit such as a channel coded data packet (transport block), a code block, or a code word, or may be a processing unit such as scheduling or link adaptation. Furthermore, when a TTI is provided, a time interval (for example, the number of symbols) in which a transport block, a code block, a code word, or the like is actually mapped may be shorter than the TTI.

Note that, when one slot or one mini slot is referred to as a TTI, one or more TTIs (that is, one or more slots or one or more mini slots) may be a minimum time unit of scheduling. Further, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini slot, a sub slot, a slot, or the like.

Note that, a long TTI (for example, a common TTI, a subframe, or the like) may be replaced with a TTI having a time length exceeding 1 ms, and a short TTI (for example, a reduced TTI or the like) may be replaced with a TTI having a TTI length which is less than a TTI length of a long TTI and equal to or more than 1 ms.

The resource block (RB) is a resource allocation unit in the time domain and the frequency domain and may include one or more consecutive subcarriers in the frequency domain. The number of subcarriers included in an RB may be the same irrespective of a numerology and may be, for example, 12. The number of subcarriers included in an RB may be determined based on a numerology.

Furthermore, a time domain of an RB may include one or more symbols and may be a length of one slot, one mini slot, one subframe, or one TTI. Each of one TTI, one subframe, or the like may be formed of one or more resource blocks.

Furthermore, one or more RBs may be referred to as a physical resource block (PRB: Physical RB), a subcarrier group (SCG: Subcarrier Group), a resource element group (REG: Resource Element Group), a PRB pair, an RB pair, or the like.

Furthermore, a resource block may be formed of one or more resource elements (RE: Resource Element). For example, one RE may be a radio resource region of one subcarrier and one symbol.

A bandwidth part (BWP: Bandwidth Part) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and it is not be assumed that the UE transmits and receives a predetermined signal/channel outside an active BWP. Further, a "cell," a "carrier," or the like in the present disclosure may be replaced with a "BWP."

Structures of the radio frame, the sub frame, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, a symbol length, a cyclic prefix (CP) length, and the like can be variously changed.

In the entire present disclosure, for example, when an article such as "a," "an," or "the" in English is added by a translation, the present disclosure may include a case in which a noun following the article is the plural.

In the present disclosure, a term "A and B are different" may mean "A and B are different from each other." Furthermore, the term may mean "each of A and B is different from C." Terms such as "separated," "coupled," or the like may also be interpreted in similarly to "different."

Although the present invention is described above in detail, it is obvious to those skilled in the art that the present invention is not limited to the embodiments described in the specification. The present invention may be implemented as revised and modified embodiments without departing from the gist and scope of the present invention as set forth in claims. Accordingly, the description of the specification is for the purpose of illustration and does not have any restrictive meaning to the present invention.

### LIST OF REFERENCE SYMBOLS

- 10: base station
- 110: transmitting unit
- 120: receiving unit
- 130: control unit
- 20: terminal
- 210: transmitting unit
- 220: receiving unit
- 230: control unit
- 1001: processor
- 1002: storage device
- 1003: auxiliary storage device
- 1004: communication device
- 1005: input device
- 1006: output device

## Claims

1. A terminal comprising:
a receiving unit that receives a system information signal transmitted in an unlicensed frequency band; and
a control unit that configures a search space for monitoring for receiving control information and configures classification information for classifying a plurality of system information signals according to applied transmit beams, based on a first index value included in the system information signal received by the receiving unit.

2. The terminal according to claim 1, wherein the control unit sets a number of system information signals to be received in a unit time interval based on a second index value included in the system information signal received by the receiving unit.

3. The terminal according to claim 2, wherein the control unit configures a reference position of the search space for monitoring for receiving the control information based on the second index value and configures a position of another search space for performing additional monitoring for receiving the control information based on the reference position and the classification information.

4. The terminal according to claim 3, wherein the control unit calculates a number of different beams applied to the plurality of system information signals based on the classification information and sets the position of the another search space based on the reference position and the calculated number of different beams.

5. The terminal according to claim 3, wherein the control unit configures a plurality of search spaces as the another search space within a monitoring period.

6. A communication method performed by a terminal, the method comprising:
receiving a system information signal transmitted in an unlicensed frequency band; and
configuring a search space for monitoring for receiving control information and configuring classification information for classifying a plurality of system information signals according to applied transmit beams, based on a first index value included in the received system information signal.
